# NOUVEAU FASCICULE DE BREVET EUROPEEN

(11) **EP 1 407 183 B2**
(45) Date de publication et mention de la décision concernant l'opposition: **01.05.2013**
(45) Mention de la délivrance du brevet: 02.08.2006
(21) Numéro de dépôt: 02764964.9
(22) Date de dépôt: 10.07.2002
(51) Int. Cl.: F16L 59/02

(54) **COQUILLE DE CALORIFUGEAGE COMPRESSEE**
KOMPRIMIERTE, SCHALENFÖRMIGE ROHRISOLIERUNG
COMPRESSED HEAT INSULATION HOUSING

(30) Priorité: 17.07.2001 WO PCT/DK01/00498; 31.10.2001 FR 0114106
(43) Date de publication de la demande: 14.04.2004
(60) Demande divisionnaire: 05007774.2
(73) Titulaire: SAINT-GOBAIN ISOVER, 92400 Courbevoie (FR)
(72) Inventeur: RIAS, Jean-Claude, F-78670 Medan (FR); DELAHOCHE, Michel, F-60140 Mogneville (FR); VAN LOOKEREN, Frank, Nottingham NG 12 4BU (GB)
(74) Mandataire: Colombier, Christian
(86) Numéro de dépôt international: PCT/FR2002/002416
(87) Numéro de publication internationale: WO 2003/008854

(56) Documents cités:
- WO-A-96/08438
- WO-A-96/37728
- WO-A-98/12466
- DE-A- 4 417 110
- DE-A1- 2 014 555
- FR-A- 1 090 209
- GB-A- 878 517
- SE-B- 373 928
- US-A- 3 329 051
- US-A- 3 648 555
- US-A- 4 205 105

## Description

L' invention concerne le domaine de l'isolation notamment thermique, voire phonique, de canalisations (comme une tuyauterie) véhiculant ou renfermant un fluide ayant une température différente de celle de son environnement. On cherche notamment à limiter les échanges de chaleur entre la canalisation et son environnement.

L'invention concerne plus particulièrement un procédé de préparation d'un ensemble comprenant un feutre compressé au volume et à la densité augmenté par rapport à son état décompressé.

Selon un premier mode de réalisation du procédé, l'ensemble est une coquille trouvant une utilisation en calorifugeage. Selon un second mode de réalisation, le feutre fait partie d'une coquille et est compressé pour être stocké et transporté, puis décompressée pour, en tant que coquille, être mis en place sur les canalisations à calorifuger. Selon ce second mode de réalisation, la capacité du feutre à être compressé permet de le stocker et de le transporter en utilisant un très faible volume comparé aux coquilles de l'art antérieur, ce qui a des répercutions très sensibles sur les coûts de stockage et de transport.

Une application particulière de l'invention concerne, dans le domaine des fluides domestiques, les tuyauteries dans lesquelles circulent de l'eau dite chaude ou froide.

On recherche des moyens isolants de canalisations, et ce quel que soit le diamètre, la longueur et le rayon de courbure de celles-ci.

L'isolation thermique des tuyaux transportant des fluides est largement répandu, tant pour protéger les tuyaux du gel que pour prévenir toute perte excessive de calories ou de frigories, et ce notamment pour des raisons d'économie d'énergie.

L'isolation dans l'habitat et le tertiaire, tel que le calorifugeage de tuyaux véhiculant des fluides passant dans des parties non chauffées, se compose généralement de matières synthéthiques expansées ou de laines minérales, en particulier de laine de verre ou de laine de roche. Le calorifugeage est alors réalisé par des éléments cylindriques appelés coquilles (« pipe section » en anglais).

Il est connu d'utiliser des éléments annulaires en laine minérale pour isoler des tuyaux et des coudes de tuyaux, toutes les fibres de la laine minérale étant agencées substantiellement parallèlement les unes aux autres.

Selon l'art antérieur, les systèmes de calorifugeage en laine minérale se présentent sous forme de longueurs cylindriques rigides fendues axialement. Ces longueurs sont rendues rigides en raison de leur masse volumique très élevé et en raison de l'utilisation de quantités importantes d'un liant entre les fibres. Ces coquilles ne sont pas compressibles puisque si l'on applique une force suffisamment importante pour les déformer, on endommage leur structure, et la partie déformée ne reprend pas exactement sa forme initiale. La coquille ne présente donc pas vraiment d'effet « ressort ». Ces coquilles ne sont notamment pas suffisamment souples pour suivre les contours des coudes et des courbes imposés par la canalisation. L'installateur qui met en oeuvre un tel calorifugeage se voit alors obligé de découper un certain nombre d'onglets en forme de sections de dimensions appropriées, adaptables sur la longueur de canalisation nécessaire, puis l'installateur les met en place à la main autour de chaque courbe ou coude. Ce procédé prend du temps, est peu pratique et peu efficace d'un point de vue thermique.

On connaît par le brevet français FR 2378230 des coquilles pour le calorifugeage de tuyaux, composées d'éléments cylindriques droits en fibres minérales dans lesquels les fibres sont disposées dans un plan perpendiculaire à l'axe du cylindre. Cette disposition permet d'obtenir des éléments relativement flexibles, utilisables notamment sur les parties courbes des canalisations. Cependant la flexibilité trouve ses limites puisque l'on fait ici uniquement appel à la compressibilité axiale des coquilles, elle-même donnée par l'élasticité des fibres.

Comme documents de l'art antérieur, on peut encore citer les documents suivants: WO 96/37728, EP 0205714, FR 2278485, EP 0133083, WO 98/12466.

L'invention concerne un procédé de préparation d'un ensemble comprenant d'une part au moins un élément de feutre compressé de laine minérale et d'autre part au moins un moyen de maintien de l'état de compression dudit feutre. Le feutre compressé peut retrouver son volume initial lorsqu'il n'est plus maintenu à l'état compressé. C'est en ce sens que le feutre compressé est décompressible.

Le procédé de fabrication de l'ensemble selon l'invention fait intervenir les étapes suivantes :
- estampage d'un élément de feutre de laine minérale dans un matelas de feutre, la longueur dudit élément correspondant à l'épaisseur du matelas, puis
- compression de l'élément estampé dans la même direction que la direction d'estampage pour faire diminuer son volume, puis,
- blocage de l'élément estampé à l'état compressé par un moyen capable de le maintenir à l'état compressé, dans son volume réduit.

L'invention fait intervenir au moins un élément de feutre pour le calorifugeage de canalisations, le terme élément étant équivalent au terme longueur. Le feutre peut être en laine minérale comme la laine de verre ou la laine de roche. Le feutre de départ non compressé et utilisé dans le cadre de la présente invention est appelé feutre primitif. On peut par exemple utiliser un feutre primitif à structure isotrope dans un plan tel que décrit dans EP 0133083. Le feutre primitif utilisable dans le cadre de la présente invention doit être compressible aisément, c'est-à-dire compressible avec les mains d'une personne moyenne sans effort important. Après compression par une pression non susceptible d'endommager trop fortement ses fibres (la pression exercée entre les mains d'une personne de force moyenne convient), le feutre doit sensiblement revenir à sa dimension initiale lorsqu'on enlève ladite pression, en une sorte d'effet « ressort ». Cet effet ressort est en fait conféré au feutre par le liant réticulé avec lequel ces types de feutre sont habituellement traités. En l'absence de liant, le feutre se comporterait comme du coton sans véritable effet ressort. Dans le cas de l'utilisation d'une trop forte quantité de liant, le feutre deviendrait trop rigide et n'aurait pas non plus d'effet ressort, une force trop importante devant alors être appliquée pour modifier la géométrie du feutre, ce qui ne manquerait cependant pas de l'endommager en rompant les fibres. La quantité de liant doit donc être telle qu'une longueur de feutre primitif de 10 cm soit aisément compressible par une seule main d'une personne de force moyenne, ledit feutre devant quasi-instantanémént retrouver son volume initial lorsqu'il est relaché par ladite personne, ceci devant être au moins vérifié lorsque la compression est exercée dans la direction correspondant à la direction de la tuyauterie à recouvrir, c'est-à-dire la direction de l'axe de la coquille, c'est-à-dire la direction longitudinale. Le feutre contient généralement un liant réticulé à raison de 3 à 8 % en poids. Le liant est généralement une résine phénolique.

La direction de l'estampage correspond à la direction de la canalisation que la coquille sera amenée à entourer, l'outil d'estampage étant généralement extérieurement de forme sensiblement cylindrique. Ainsi, l'élément de feutre estampé a généralement la forme d'un tube dont la longueur, à l'état décompressé, correspond à l'épaisseur du matelas de feutre (primitif). Le tube comprend en tant que surfaces externes, deux bases de forme annulaire, lesdites deux bases étant parallèles, et une surface cylindrique placée entre les deux bases.

Dans le cadre de la présente demande, on appelle « direction (ou sens) longitudinale », la direction d'estampage laquelle correspond également à la direction de la tuyauterie à recouvrir et, pour le cas l'élément de feutre a une forme annulaire, à son axe de révolution. On appelle « direction (ou sens) radiale » les directions perpendiculaires à la direction longitudinale.

De préférence, la direction longitudinale est perpendiculaire au plan de dépose des fibres de laine minérale lors de la fabrication du feutre. Ainsi, les fibres sont préférentiellement orientées en direction radiale. Il n'est pas exclu que le feutre soit crêpé, mais cela n'est pas préféré. Le feutre primitif peut avoir comme épaisseur : 20 à 300 mm et de préférence 100 à 250 mm. Le feutre primitif peut par exemple avoir une masse volumique allant de 5 à 25 kg/m³ et de préférence 10 à 15 kg/m³ (état non compressé). Par compression entre les mains d'une personne de force moyenne, ce feutre primitif est généralement compressible dans la direction longitudinale jusqu'à pouvoir atteindre une masse volumique égale à 7 à 10 fois, et plus généralement 8 fois celle du feutre primitif sans que cela n'endommage sa structure, de sorte que le feutre retrouve son volume initial lorsqu'il est relaché.

Comme laine minérale, on peut utiliser une laine de roche, mais on utilise de préférence une laine de verre. En effet, en raison de son procédé de fabrication dit de « centrifugation interne », la laine de verre présente un taux d'infibrés inférieur et des fibres plus longues et en conséquence des propriétés mécaniques supérieures, si on la compare à la laine de roche, laquelle est fabriquée par un procédé dit de « centrifugation externe ».

L'outil d'estampage peut aussi réaliser la découpe longitudinale permettant d'ouvrir l'élément de feutre de façon à pouvoir le loger autour de la canalisation à calorifuger. Ainsi, la direction de la coupe longitudinale correspond à la direction d'estampage. La découpe longitudinale peut donc être réalisée simultanément à la réalisation de la découpe de la forme tubulaire de l'élément de feutre ou postérieurement à celle-ci.

Après estampage, l'élément de feutre estampé est compressé de façon à réduire son volume apparent. La compression est réalisée grâce à une pression exercée sur les deux bases planes parrallèles de forme annulaire. La pression doit être suffisante pour réduire le volume apparent de l'élément sans pour autant détruire les fibres en une proportion telle que si l'on annule la pression, l'élément ne retrouve pas son volume initiale. Pour donner une idée de l'ordre de grandeur de la pression nécessaire, on peut dire que généralement, la pression exercée par les deux mains d'une personne de force moyenne, convient.

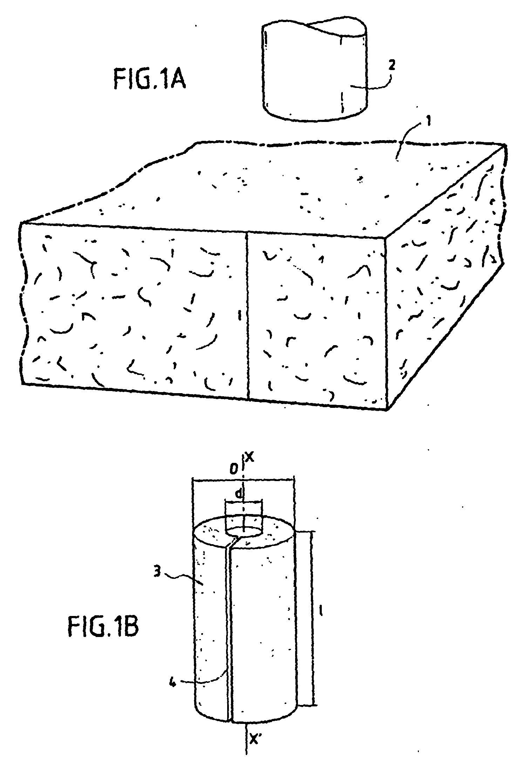

Les éléments de feutre ont généralement une forme tubulaire et leur forme peut être définie par une longueur et deux diamètres, l'un, (D) correspondant à la section circulaire externe de l'élément, l'autre, (d) correspondant à la section circulaire interne de l'élément, ce dernier diamètre pouvant correspondre à celui de la canalisation à calorifuger (voir (D) et (d) sur la figure 1) ou lui étant proche.

(D) peut aller de 35 à 110 mm et plus généralement est d'environ 70 mm. (d) peut aller de 19 à 60 mm et plus généralement est d'environ 25 mm.

La figure 1a représente le feutre d'origine (1), d'épaisseur (I) dans lequel l'élément de feutre va être estampé et l'outil d'estampage (2) en position au-dessus du feutre, prêt à l'estamper. La figure 1b représente l'élément de feutre estampé (3), de forme tubulaire, la hauteur du tube étant identique à celle du matelas de feutre d'origine, c'est-à-dire égale à (I). Une découpe longitudinale (4) servant à ouvrir l'élément de façon à pouvoir le placer autour d'une canalisation a été réalisée postérieurement à la découpe de la forme tubulaire de l'élément de feutre.

Selon un premier mode de réalisation, l'élément estampé de feutre primitif est compressé dans le sens longitudinal, est maintenu à l'état compressé par un film que l'on enroule autour de lui sur sa surface de forme cylindrique. De façon à ce que l'élément de feutre soit bien maintenu en position compressé, il est préférable de coller le film autour de l'élément. Le moyen de maintien est donc dans ce cas le film, de préférence associé à de la colle. Comme l'élément de feutre est également compressible dans une certaine mesure dans le sens radial, il est possible lors de l'application du film, de comprimer ledit élément également dans le sens radial pour faire légèrement diminuer son diamètre. En raison de l'effet ressort exercé par l'élément de feutre également dans le sens radial, le film appliqué sur la coquille présente un aspect plus tendu, moins froissé, ce qui est avantageux sur le plan esthétique. La compression exercée sur le feutre lors de la constitution de la coquille surfacée ne doit être que partielle, s'agissant de la compression longitudinale d'une part, mais s'agissant bien entendu également de l'éventuelle légère compression radiale. Le feutre compressé à l'intérieur de la coquille surfacée peut par exemple avoir une masse volumique allant de 15 à 30 kg/m³ et de préférence 18 à 24 kg/m³. De préférence, le rapport de la masse volumique du feutre compressé à l'intérieur de la coquille surfacée sur la masse volumique du feutre primitif (avant compression) va de 1,5 à 2,5.

Dans le cadre de ce premier mode de réalisation, l'élément de feutre compressé n'est en fait compressé que partiellement par rapport à ce que le feutre primitif pourrait théoriquement supporter. C'est en ce sens que le feutre compressé reste compressible. La pression exercée pour la compression doit être telle que le feutre maintenu à l'état compressé reste déformable de sorte que lorsqu'il est mis à l'état compressé autour d'une canalisation, il puisse facilement suivre les changements de direction de ladite canalisation et notamment les coudes à 90°. L'élément de feutre compressé est donc, pour ce premier mode de réalisation, aisément déformable pour former un coude à 90°.

Le film comprend au moins une couche d'un polymère thermoplastique comme une polyoléfine (polyéthylène, polypropylène ou autre) ou un polyester comme le polyéthylène téréphtalate (PET). Le film peut également comprendre une couche d'aluminium, et dans ce cas, c'est généralement pour donner un aspect métallisé à la coquille. L'éventuelle couche d'aluminium est donc généralement visible de l'extérieur, soit parce qu'elle est sur la face externe de la coquille, soit parce qu'elle est visible à travers la couche de polymère thermoplastique. La couche d'aluminium peut être issue d'une feuille d'aluminium qui a été contrecollée sur la couche de polymère thermoplastique, ou elle peut provenir d'un dépôt par phase vapeur (par métallisation ou sputtering) réalisé sur la couche de polymère thermoplastique, sur sa face interne ou externe (par rapport à la coquille).

Le film peut également être renforcé par de la fibre de verre ou de polymère (par exemple en PET), généralement de la fibre continue collée sur le film en des lignes parallèles (des mèches de fibre forment des lignes parallèles) ou constituant une grille. Cette fibre peut être appliquée sur le film à raison de 10 à 100 g/m².

Le film a généralement une épaisseur allant de 10 à 100 µm, et de préférence de 10 à 80 µm.

On donne ci-après quelques exemples de films adaptés à la réalisation de coquilles surfacées :

| **Nature des couches** | **Epaisseur (µm)** | **Grammage (g/m²)** |
|---|---|---|
| Polyéthylène métallisé (par de l'aluminium sur la face interne) | 12 | 17 |
| -polyester métallisé | 13 | 20 |
| -grille verre/polyester | - | |
| -polypropylène | 38,1 | 75 |
| Polyester métallisé (par de l'aluminium sur la face interne) | 50 | 70 |
| Polyester métallisé (par de l'aluminium sur la face interne) | 75 | 105 |
| Polyester métallisé (par de l'aluminium sur la face interne) | 12 | 17 |
| -feuille aluminium | 20 | |
| -grille de fibre de verre | - | 90 |
| -enduction polyéthylène basse densité | 20 | |

Dans ce tableau, chaque ligne constitue un exemple. Dans la première colonne de ce tableau, lorsque le film comprend plusieurs couches, on a indiqué en premier la couche externe (visible de l'extérieur de la coquille), les autres couches étant ensuite indiquées dans l'ordre de leur présence à partir de la couche externe.

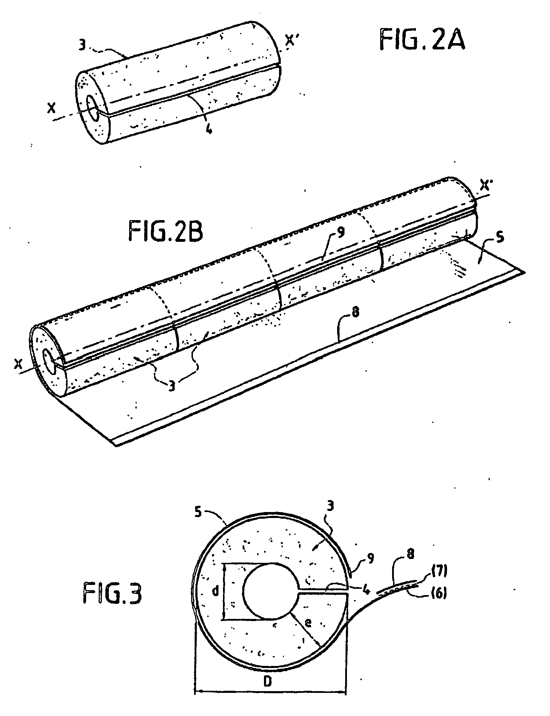

La figure 2 illustre ce premier mode de réalisation. La figure 2a représente un élément estampé de feutre primitif, libre de toute contrainte et donc non comprimé. La figure 2b montre plusieurs (quatre) de ces éléments juxtaposés et comprimés (la longueur de chacun de ces éléments est réduite par rapport à ce qu'elle est sur la figure 2a) que l'on maintient à l'état comprimé pendant que l'on applique le film préencollé autour desdits éléments. La figure 2b) représente l'association de différents éléments, en cours de réalisation. A la fin de ladite réalisation, le film entoure entièrement les éléments juxtaposés pour former une coquille dite surfacée (par référence à l'état de surface conféré à la coquille par le film) associant plusieurs éléments juxtaposés de feutre estampé. L'expression coquille surfacée désigne l'ensemble comprenant au moins un élément de feutre compressé (généralement plusieurs éléments de feutre compressés) dans la direction longitudinale, ledit au moins un élément étant entouré sur sa surface externe parallèle à son axe (X-X' sur la figure 2) d'un film maintenant son état compressé. Les éventuels différents éléments ont leurs axes de révolution respectifs (X-X' sur la figure 2) qui coïncident entre eux. Bien entendu, pour le cas ou la colle est nécessaire au maintien de l'état de compression, on doit maintenir l'état de compression voulu le temps que la colle durcisse et rende le film capable de maintenir seul ledit état de compression. II n'est pas exclu de n'entourer qu'un seul élément à l'état compressé par le film. Cependant, généralement, on place au moins deux éléments, et plus généralement au moins trois éléments, et encore plus généralement quatre ou cinq ou six ou sept éléments à l'intérieur de la coquille surfacée. Ces différents éléments se touchent à l'intérieur de la coquille par leurs bases de forme annelée (base à la forme annelée du tube constituant la coquille). Bien entendu, si ladite coquille contient plusieurs éléments, les découpes longitudinales 4 des différents éléments juxtaposés sont alignées à l'intérieur de la coquille surfacée. A l'intérieur d'une même coquille contenant plusieurs éléments, les éléments sont serrés les uns aux autres sous l'effet de leur propre compression. En effet, de la sorte, il est possible de faire suivre à la coquille surfacée des canalisations ayant des trajets très divers et non toujours rectilignes, comme les coudes, sans que les éléments à l'intérieur de la coquille ne se disjoignent. Le fait que le ou les éléments de feutre soient compressés à l'intérieur de la coquille tout en restant encore compressibles donne à la coquille la faculté de se laisser facilement poser sur les canalisations même non rectilignes et pouvant comporter des coudes. En effet, dans un coude, l'élément de feutre à l'endroit du coude suivra le coude, en se comprimant davantage du côté de l'intérieur du coude, et deux éléments de feutre resteront également bien juxtaposés dans un tel coude comme cela a déjà été expliqué. De la sorte, bien qu'il ne soit pas exclu de coller différents éléments de feutre entre eux par leur base à l'intérieur d'une coquille, cela ne parait pas nécessaire si lesdits éléments sont suffisamment serrés les uns contre les autres sous l'effet de leur compression au sein de la coquille.

L'isolation des portions non rectilignes de la canalisation peut être de ce fait correctement assurée.

La coquille surfacée peut avoir par exemple une longueur allant de 30 à 120 cm.

En général, les canalisations à isoler sont plus longues qu'une seule coquille surfacée, et il convient généralement de juxtaposer plusieurs coquilles surfacées les unes après les autres. L'utilisateur chargé d'isoler une canalisation pourra trouver utile de jouer sur la compressibilité des coquilles surfacées pour les serrer les unes contre les autres en les comprimant légèrement dans la direction de leur axe (c'est-à-dire celui de la canalisation). Ainsi, l'installation profite de l'effet ressort des coquilles pour assurer une correcte jonction entre les coquilles.

La coquille surfacée peut être du type de celle représentée sur la figure 3, laquelle représente la coquille (3) vue dans la direction de son axe. Cette coquille a été entourée d'un film plastique souple (5). Le film a été collé sur la face externe de forme cylindrique de la coquille. Le film, dans sa dimension destinée à faire le tour de la coquille est un peu plus long que le périmètre externe de la coquille de façon à ménager un rabat (6). Ce rabat a pour fonction de refermer la coquille au-dessus de la découpe longitudinale (4) après avoir été placée autour de la canalisation à calorifuger. Le rabat peut être muni d'une couche d'adhésif (7) (par exemple un adhésif permanent du type hot melt) représentée en pointillé. La couche d'adhésif peut elle-même être recouverte d'une bande (8) d'un film pelable (par exemple en papier siliconé) dont la fonction est de protéger l'adhésif jusqu'à l'utilisation finale. Après avoir placé la coquille autour de la canalisation à calorifuger, l'installateur enlève par pelage la bande pelable (8) et colle le rabat sur l'autre bord du film métallisé (5), c'est-à-dire sur la zone (9) comme représenté sur la figure 3. La coquille est alors bien maintenue en place sur la canalisation, le rabat recouvrant la découpe longitudinale. Il est également possible de ne pas avoir recours à la bande pelable, dès lors que le rabat 6 peut être directement collé et décollé à volonté sur la zone 9 en jouant sur les propriétés de l'adhésif permanent ayant la propriété autorisant le repositionnement. Dans ce cas, avant placement autour de la canalisation, l'utilisateur dispose de la coquille à l'état refermé, le rabat 6 étant collé sur la zone 9 (absence de film pelable 8). Il décolle alors le rabat pour découvrir la découpe longitudinale 4, place la coquille autour de la canalisation, et referme la coquille en recollant le rabat 6 sur la zone 9. Grâce à la propriété de repositionnement conférée par l'adhésif, il est par la suite toujours possible de facilement démonter et remonter la coquille autour de la canalisation en décollant puis recollant le rabat, par exemple de façon à pouvoir procéder à des réparations sur la canalisation.

La coquille surfacée présente également la faculté d'être compressible dans la direction perpendiculaire à son axe. L'utilisateur peut jouer sur cette propriété et refermer la coquille en choisissant une position de rabat serrant plus ou moins la canalisation. En effet, grâce à cette propriété de compressibilité, il est possible de placer la coquille sur des canalisations dont le diamètre n'est pas exactement celui du diamètre interne de la coquille avant placement sur la canalisation. Le diamètre de la canalisation peut ainsi être légèrement inférieur où légèrement supérieur à celui du diamètre interne de la coquille avant placement sur la canalisation.

La coquille surfacée présente notamment l'avantage de faciliter la réparation de la canalisation qu'elle recouvre. En effet, pour le cas ou la canalisation viendrait à devoir être réparée, il n'est pas indispensable de désolidariser la coquille de la canalisation. II suffit en effet de surcompresser dans le sens longitudinal la coquille à l'endroit ou la réparation est nécessaire de façon à découvrir la canalisation et le défaut à réparer, de maintenir cet état de surcompression, et de procéder à la réparation. Celle-ci étant terminée, il suffit d'enlever la surcompression pour que la coquille recouvre de nouveau la canalisation. On profite donc ici du fait que la coquille surfacée reste compressible.

La coquille surfacée peut par exemple avoir un diamètre interne (« d » sur la figure 3) allant de 6 à 34 mm et une épaisseur (« e » sur la figure 3) allant de 19 à 25 mm.

La coquille surfacée peut par exemple avoir les dimensions suivantes :

| | | | | |
|---|---|---|---|---|
| **Diamètre externe** | 72 mm | 66 mm | 80 mm | 110 mm |
| **Diamètre interne** | 22 mm | 28 mm | 42 mm | 60 mm |
| **Longueur** | 1200 mm | 1000 mm | 600 mm | 1800 mm |
| **Diamètre de la canalisation à recouvrir** | 17 à 27 mm | 33 à 42 mm | 40 à 49 mm | 50 à 60 mm |

Selon un second mode de réalisation de l'invention, le moyen de maintien n'est pas définitivement fixé à l'élément de feutre et peut être enlevé de façon à ce que l'élément de feutre retrouve son volume avant compression. On profite ici de ce que l'élément de feutre estampé est compressible mais aussi décompressible dans la direction longitudinale. Dans ce cas, après compression dans la direction longitudinale, on maintient l'élément de feutre compressé dans son état compressé grâce à un moyen de maintien. On peut ainsi stocker et transporter l'élément avec un volume réduit. Avant utilisation de l'élément pour être placé autour des canalisation à isoler, on enlève le moyen de maintien, ce qui permet à l'élément de retrouver son volume avant compression. Bien entendu, généralement, ce seront plusieurs (deux ou trois ou quatre ou cinq ou six ou sept, voire plus) éléments de feutre juxtaposés par leur base de forme annulaire qui seront compressés ensemble et maintenus ensemble juxtaposés par le même moyen de maintien.

Ainsi, l'invention concerne un procédé de préparation d'un ensemble comprenant d'une part au moins un élément de feutre compressé de laine minérale et d'autre part un moyen de maintien de l'état de compression dudit élément, ce dernier pouvant retrouver un état moins compressé lorsqu'on le libère dudit moyen de maintien.

Après compression au volume choisi, l'élément de feutre est bloqué dans sa position par au moins un moyen de maintien de son état compressé. Ce moyen de maintien peut être tout système adapté. Par exemple, on peut procéder de la manière suivante : placer une feuille rigide, par exemple en carton ou en une matière plastique comme une polyoléfine (PE, PP, etc), sur chacune des deux faces à rapprocher de l'élément estampé puis exercer une pression sur les faces externes des deux feuilles rigides, puis, l'ensemble étant maintenu en position de compression, on entoure l'ensemble par un manchon en un film thermorétractable et l'on chauffe ledit manchon de façon à ce que celui-ci se rétracte et resserre l'ensemble pour le maintenir à l'état compressé. On peut alors annuler la pression d'origine s'exerçant sur les faces des feuilles rigides pour récupérer un ensemble comprenant un élément de feutre bloqué à l'état compressé par un moyen de maintien. Dans ce cas, le moyen de maintien est constitué des deux feuilles rigides placées de part et d'autre de l'élément de feutre compressé et du manchon thermorétracté épousant l'élément de feutre et au moins le périmètre des deux feuilles rigides de façon à donner une cohésion audit ensemble. Cet ensemble peut être facilement manipulé, stocké, transporté tout en représentant un faible volume. Au moment de son utilisation, il suffit de découper ou déchirer le manchon thermorétracté pour que l'élément de feutre retrouve son volume d'origine, c'est-à-dire avant compression. L'élément de feutre peut alors être mise en place comme coquille sur la canalisation à calorifuger.

On peut également procéder ainsi : on place au moins un élément de feutre à l'état non compressé dans un cylindre fermé à l'une de ses extrémités et muni d'un pas de vis à l'autre extrémité. On comprime alors l'élément de feutre de façon à ce qu'il rentre entièrement dans le cylindre et l'on ferme ensuite le cylindre par un bouchon que l'on visse sur le pas de vis du cylindre. Ici, au moment d'utiliser l'élément de feutre, il suffit de dévisser le bouchon du cylindre pour que l'élément de feutre se décomprime et retrouve son volume avant compression pour être tenu par le moyen de maintien. L'élément de feutre peut alors être mis en place sur la canalisation à calorifuger, en tant que coquille.

Dans le cadre de ce second mode de réalisation, un élément de feutre n'est en général pas compressé seul, mais est associé à d'autres éléments de feutre identiques et compressés de la même manière. Dans leur état compressé, tous ces éléments de feutre sont juxtaposés par leurs bases de forme annulaire, leurs surfaces externes de forme cylindrique étant toutes dans le même prolongement.

Dans le cadre de ce second mode de réalisation, l'élément de feutre libéré de son moyen de maintien peut être une coquille d'isolation. Au moins un élément de feutre peut être munis sur sa surface externe de forme cylindrique d'une feuille souple ou d'un film souple n'empêchant pas ledit élément d'être compressé et décompressé. Il peut s'agir d'une feuille d'aluminium, généralement collée sur ladite face externe de forme cylindrique. Cependant, si l'on souhaite munir ledit élément d'un tel revêtement sur sa face externe de forme cylindrique, on préfère que ledit revêtement comprenne au moins une couche d'un polymère thermoplastique, par exemple à pase de polyoléfine (polyéthylène, polypropylène ou autre). En effet, un tel polymère thermoplastique est plus souple qu'une feuille d'aluminium, et la compression et décompression se traduit dans son cas par un aspect extérieur moins froissé et donc plus esthétique. On peut également utiliser l'un des film cité dans le cadre du premier mode de réalisation. Généralement, dans le cas de l'utilisation de plusieurs éléments de feutre et d'un film, ces éléments de feutre, alignés selon leur axe et se touchant par leur base de forme annulaire, sont regroupés et entourés par un film commun (un longueur de film entoure plusieurs éléments de feutre).

Dans le cadre de ce second mode de réalisation , il est possible de compresser le feutre de sorte que sa densité approche la valeur maximale possible déjà donnée, à savoir 7 à 10 fois, et plus généralement environ 8 fois la masse volumique du feutre primitif, sans endommager la structure du feutre. Plus généralement la compression est réalisée dans le cadre de ce second mode de réalisation pour que le feutre atteigne une densité allant de 15 à150 kg/m³.

Dans le cadre de ce second mode de réalisation, il est possible d'utiliser comme élément de feutre une coquille surfacée déjà décrite dans le cadre du premier mode de réalisation. Dans ce cas, l'élément de feutre est déjà partiellement compressé dans le cadre du premier mode de réalisation, et est encore plus compressé dans le cadre du second mode de réalisation. Lorsqu'on enlève le moyen de maintien, la coquille surfacée retrouve son volume initial, ce qui signifie que le feutre reste compressé comme il l'était pour l'exécution du premier mode de réalisation.

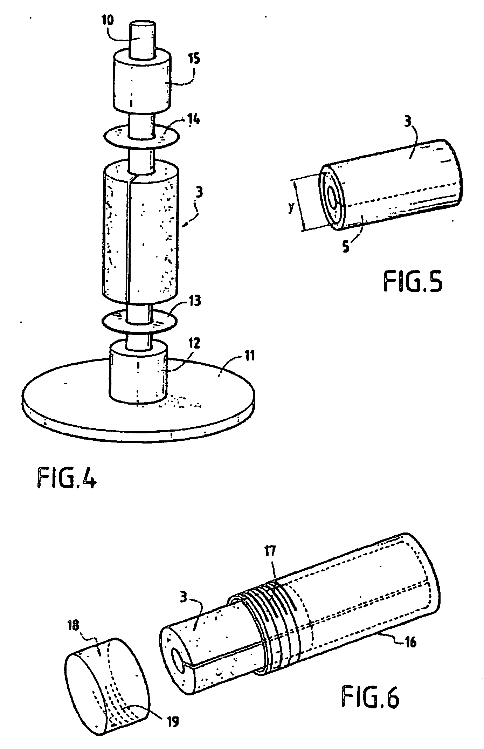

La figure 4 représente les pièces pouvant être utilisées pour réaliser un ensemble (second mode de réalisation) comprenant deux éléments de feutre maintenus en compression par l'intermédiaire de deux feuilles rigides (de carton ou de plastique ou de tout autre matière adaptée) et d'un film thermorétractable. On enfile sur un barreau 10 solidaire d'une base 11 faisant office de butée :
- un premier mandrin rigide 12 (par exemple en métal), puis,
- une première feuille rigide 13 (par exemple en carton) de diamètre voisin de ceux des éléments à compresser, puis
- les deux éléments à compresser 3 éventuellement munie de leur revêtement en film souple (non représenté), puis
- une seconde feuille rigide 14 (par exemple en carton) de diamètre voisin de ceux des éléments à compresser, puis
- un second mandrin rigide 15 (par exemple en métal).

Les mandrins 12 et 15, de forme tubulaire, présente un diamètre inférieur à celui des feuilles rigides 13 et 14.

On exerce ensuite une pression sur le mandrin 15 de façon à serrer l'ensemble des pièces enfilées sur le barreau 10 et donc de façon à compresser les éléments de feutre. On exerce la pression nécessaire à l'obtention du taux de compression souhaité. On place ensuite un manchon de film thermoplastique thermorétractable autour de l'ensemble compressé, le diamètre dudit manchon étant bien entendu supérieur au diamètre des éléments de feutre et des feuilles rigides à enserrer tout en en restant voisin, et l'on chauffe le manchon de façon à ce qu'il se rétracte et maintienne à l'état resserré lesdits éléments et les feuilles rigides. On obtient alors un ensemble tel que représenté sur la figure 5 comprenant le feutre maintenu à l'état compressé par les feuilles rigides en carton placées de part et d'autre du feutre, et le film thermorétracté. La dimension du film thermorétractable est choisi de sorte qu'après rétraction, le film thermorétracté laisse un espace suffisant sur les côtés pour pouvoir dégager les mandrins 12 et 15. Ceci signifie que le film thermorétracté forme des orifices sur les faces latérales de l'ensemble final, le diamètre (y) desdits orifices étant supérieur à celui des mandrins 12 et 15, ce qui a permit de dégager sans difficulté l'ensemble contenant le feutre des mandrins.

La figure 6 représente un autre moyen de réalisation de l'ensemble compressé. Trois éléments de feutre estampés sont placés à l'état décomprimé dans un cylindre en plastique transparent 16, ledit cylindre étant munis d'un pas de vis mâle. Il suffit de compresser lesdits éléments avec le bouchon 18 lui-même muni d'un pas de vis femelle 19 adapté au pas de vis 18 de façon à faire rentrer entièrement le feutre dans le cylindre, puis de visser le bouchon sur le cylindre, pour obtenir l'ensemble contenant le feutre compressé.

## Revendications

1. Procédé de préparation d'un ensemble comprenant d'une part un élément (3) de feutre de laine minérale liée par un liant réticulé, ledit élément étant de forme tubulaire et étant compressé après réticulation du liant dans la direction longitudinale correspondant à l'axe de la forme tubulaire, et d'autre part au moins un moyen de maintien (5) de l'état de compression dudit feutre, **caractérisé en ce qu'**il comprend les étapes suivantes :
- estampage d'un élément de feutre de laine minérale dans un matelas de feutre, la longueur dudit élément correspondant à l'épaisseur du matelas, puis
- compression de l'élément estampé dans la même direction que la direction d'estampage pour faire diminuer son volume, puis,
- blocage de l'élément estampé à l'état compressé par un moyen capable de le maintenir à l'état compressé, dans son volume réduit.

2. Procédé selon la revendication précédente **caractérisé en ce que** le feutre, avant compression, une masse volumique allant de 5 à 25 kg/m3.

3. Procédé selon la revendication précédente, **caractérisé en ce que** le feutre a, avant compression, une masse volumique allant de 10 à 15 kg/m3.

4. Procédé selon l'une des revendications précédentes **caractérisé en ce que** le feutre comprend 3 à 8 % en poids de liant réticulé.

5. Procédé selon la revendication précédente, **caractérisé en ce que** le moyen de maintien est un film entourant l'élément de feutre sur sa surface de forme cylindrique.

6. Procédé selon la revendication précédente, **caractérisé en ce que** le film est collé au feutre.

7. Procédé selon la revendication précédente **caractérisé en ce que** le film comprend au moins une couche d'un polymère thermoplastique.

8. Procédé selon l'une des deux revendications précédentes **caractérisé en ce que** le film comprend de la fibre continu pour le renforcer.

9. Procédé selon l'une des revendications précédentes **caractérisé en ce que** le feutre reste compressible.

10. Procédé selon l'une des revendications précédentes **caractérisé en ce que** le feutre compressé a une densité allant de 15 à 30 kg/m3.

11. Procédé selon l'une des revendications précédentes **caractérisé en ce que** le feutre compressé a une densité allant de 18 à 24 kg/m3.

12. Procédé selon l'une des revendications précédentes **caractérisé en ce que** le rapport de la masse volumique du feutre compressé sur la masse volumique du feutre avant compression va de 1,5 à 2,5.

13. Procédé selon l'une des revendications 1 à 4 **caractérisé en ce que** le moyen de maintien peut être enlevé de façon à ce que l'élément de feutre retrouve sa masse volumique d'avant compression.

14. Procédé selon la revendication précédente, **caractérisé en ce que** le feutre est compressé de façon à ce qu'il atteigne une masse volumique égale à 7 à 10 fois sa masse volumique à l'état non compressé.

15. Procédé selon l'une des deux revendications précédentes **caractérisé en ce que** l'élément de feutre fait partie d'une coquille d'isolation comprenant un ensemble selon l'une des revendications 5 à 12.

16. Procédé selon l'une des revendications précédentes **caractérisé en ce que** l'axe de la forme tubulaire est perpendiculaire au sens de dépose des fibres dans le feutre.

17. Procédé selon l'une des revendications précédentes **caractérisé en ce que** la laine minérale est une laine verre.

18. Procédé selon l'une des revendications précédentes **caractérisé en ce que** l'ensemble comprend plusieurs éléments de feutre identiques juxtaposés par leurs bases de forme annulaire et dont les surfaces externes sont dans le même prolongement.

## Claims

1. Method of preparing an assembly comprising on the one hand, a mineral wool felt element (3) bound by a crosslinked binder, the said element having a tubular shape and being compressed, after crosslinking of the binder, in the longitudinal direction corresponding to the axis of the tubular shape, and on the other hand at least one means (5) of maintaining the compression state of the said felt, **characterized in that** it comprises the following steps:
- stamping out a mineral wool felt element from a felt mattress, the length of the said element corresponding to the thickness of the mattress, then
- compressing the stamped element in the same direction as the stamping direction in order to decrease its volume, then
- blocking the stamped element in the compressed state by a means capable of maintaining it in the compressed state, in its reduced volume.

2. Method according to the preceding claim, **characterized in that** the felt, before compression, has a density ranging from 5 to 25 kg/m3.

3. Method according to the preceding claim, **characterized in that** the felt, before compression, has a density ranging from 10 to 15 kg/m3.

4. Method according to one of the preceding claims, **characterized in that** the felt comprises 3 to 8% by weight of crosslinked binder.

5. Method according to the preceding claim, **characterized in that** the maintaining means is a film surrounding the felt element on its cylinder-shaped surface.

6. Method according to the preceding claim, **characterized in that** the film is bonded to the felt.

7. Method according to the preceding claim, **characterized in that** the film comprises at least one layer of a thermoplastic polymer.

8. Method according to one of the preceding claims, **characterized in that** the film comprises continuous fibre in order to reinforce it.

9. Method according to one of the preceding claims, **characterized in that** the felt remains compressible.

10. Method according to one of the preceding claims, **characterized in that** the compressed felt has a density ranging from 15 to 30 kg/m3.

11. Method according to one of the preceding claims, **characterized in that** the compressed felt has a density ranging from 18 to 24 kg/m3.

12. Method according to one of the preceding claims, **characterized in that** the ratio of the compressed felt density to the felt density before compression ranges from 1.5 to 2.5.

13. Method according to one of Claims 1 to 4, **characterized in that** the means of maintaining may be removed so that the felt element returns to its density before compression.

14. Method according to the preceding claim, **characterized in that** the felt is compressed so that it attains a density equal to 7 to 10 times its density in the uncompressed state.

15. Method according to one of the two preceding claims, **characterized in that** the felt element is part of an insulating pipe section comprising an assembly according to one of Claims 5 to 12.

16. Method according to one of the preceding claims, **characterized in that** the axis of the tubular shape is perpendicular to the direction in which the fibres are deposited in the felt.

17. Method according to one of the preceding claims, **characterized in that** the mineral wool is a glass wool.

18. Method according to one of the preceding claims, **characterized in that** the assembly comprises several identical felt elements juxtaposed by their ring-shaped bases and whose outer surfaces are aligned.

## Patentansprüche

1. Verfahren zur Herstellung einer Einheit die einerseits ein Filzelement (3) aus einer Mineralwolle, die mit einem vernetzten Bindemittel verbunden ist, wobei das Element röhrenförmig und nach Vernetzung des Bindemittels in der Längsrichtung, die der Achse der Röhrenform entspricht, komprimiert ist, und andererseits mindestens ein Mittel (5), um den Filz im komprimierten Zustand zu halten, umfasst, **dadurch gekennzeichnet, dass** es die Stufen:
- stanzen eines Filzelements aus Mineralwolle zu einer Filzmatte, wobei die Länge des Elements der Dicke der Matte entspricht,
- Komprimieren des gestanzten Elements in derselben Richtung wie die Pressrichtung, um sein Volumen zu verkleinern, und anschließend
- Blockieren des gestanzten Elements im komprimierten Zustand durch ein Mittel, das in der Lage ist, es im komprimierten Zustand mit seinem verkleinerten Volumen zu halten,
umfasst.

2. Verfahren nach dem vorhergehenden Anspruch, **dadurch gekennzeichnet, dass** die Dichte des Filzes vor dem Komprimieren 5 bis 25 kg/m³ beträgt.

3. Verfahren nach dem vorhergehenden Anspruch, **dadurch gekennzeichnet, dass** die Dichte des Filzes vor dem Komprimieren 10 bis 15 kg/m³ beträgt.

4. Verfahren nach einem der vorhergehenden Ansprüche, **dadurch gekennzeichnet, dass** das Filzelement 3 bis 8 Gew.-% vernetztes Bindemittel enthält.

5. Verfahren nach dem vorhergehenden Anspruch, **dadurch gekennzeichnet, dass** das Haltemittel eine Folie ist, die das Filzelement auf dessen zylindrischer Oberfläche umgibt.

6. Verfahren nach dem vorhergehenden Anspruch, **dadurch gekennzeichnet, dass** die Folie auf den Filz geklebt ist.

7. Verfahren nach dem vorhergehenden Anspruch, **dadurch gekennzeichnet, dass** die Folie mindestens eine Schicht aus einem thermoplastischen Polymer umfasst.

8. Verfahren nach einem der zwei vorhergehenden Ansprüche, **dadurch gekennzeichnet, dass** die Folie zu ihrer Verstärkung eine endlose Faser umfasst.

9. Verfahren nach einem der vorhergehenden Ansprüche, **dadurch gekennzeichnet, dass** der Filz komprimierbar bleibt.

10. Verfahren nach einem der vorhergehenden Ansprüche, **dadurch gekennzeichnet, dass** die Dichte des komprimierten Filzes 15 bis 30 kg/m³ beträgt.

11. Verfahren nach einem der vorhergehenden Ansprüche, **dadurch gekennzeichnet, dass** die Dichte des komprimierten Filzes 18 bis 24 kg/m³ beträgt.

12. Verfahren nach einem der vorhergehenden Ansprüche, **dadurch gekennzeichnet, dass** das Verhältnis von Dichte des komprimierten Filzes zu Dichte des Filzes vor dem Komprimieren 1,5 bis 2,5 beträgt.

13. Verfahren nach einem der Ansprüche 1 bis 4, **dadurch gekennzeichnet, dass** das Haltemittel derart entfernt werden kann, dass das Filzelement wieder seine Dichte vor dem Komprimieren annimmt.

14. Verfahren nach dem vorhergehenden Anspruch, **dadurch gekennzeichnet, dass** der Filz derart komprimiert wird, dass er eine Dichte erreicht, die das 7-bis 10-Fache seiner Dichte vor dem Komprimieren beträgt.

15. Verfahren nach einem der zwei vorhergehenden Ansprüche, **dadurch gekennzeichnet, dass** das Filzelement Bestandteil einer Isolierschale ist, die eine Einheit nach einem der Ansprüche 5 bis 12 umfasst.

16. Verfahren nach einem der vorhergehenden Ansprüche, **dadurch gekennzeichnet, dass** die Achse der Röhrenform quer zur Ablegerichtung der Fasern im Filz verläuft.

17. Verfahren nach einem der vorhergehenden Ansprüche, **dadurch gekennzeichnet, dass** die Mineralwolle eine Glaswolle ist.

18. Verfahren nach einem der vorhergehenden Ansprüche, **dadurch gekennzeichnet, dass** die Einheit mehrere gleiche Filzelemente umfasst, die über ihre ringförmigen Grundflächen nebeneinander angeordnet sind und deren Außenflächen in derselben Verlängerung verlaufen.
